# EUROPEAN PATENT SPECIFICATION

(11) **EP 4 245 145 B1**
(45) Date of publication and mention of the grant of the patent: **03.09.2025**
(21) Application number: 23161320.9
(22) Date of filing: 10.03.2023
(51) Int. Cl.: A21C 11/00

(54) **DEVICE FOR SPREADING DOUGHS**
VORRICHTUNG ZUM AUSBRINGEN VON TEIG
DISPOSITIF POUR ÉPANDRE DES PÂTES

(30) Priority: 17.03.2022 IT 202200005201
(43) Date of publication of application: 20.09.2023
(73) Proprietor: Minipan S.r.l., 48024 Massa Lombarda (RA) (IT)
(72) Inventor: LEONI, Davide, 48017 CONSELICE RA (IT); LANDI, Alessandro, 48012 BAGNACAVALLO RA (IT)
(74) Representative: Modiano, Micaela Nadia

(56) References cited:
- EP-B1- 0 532 786
- WO-A1-2015/115220
- AU-B2- 2019 308 823
- IT-A1- 201900 013 548
- US-A1- 2006 222 748

## Description

The present invention relates to a device for spreading doughs.

The term "spreading" is to be understood as the operation (generally performed manually by an operator) by means of which the dough undergoes a transverse stretching, i.e. a widening (understood as an increase in the dimension of its contour), with a consequent thinning thereof (due to the phenomenon of necking).

This operation is generally performed on focaccias, pinsas, spianatas, pizzas, flatbreads, baked products with a substantially laminar shape and other similar food products, in order to give the right thickness and dimension to the dough before baking it.

As these are generally highly hydrated doughs (i.e., doughs in which the water content is more than 55% by weight on the flour content), it is always preferable to resort to manual spreading by an operator to avoid tearing the dough.

Industrial rolling units of the known type instead can operate easily only on doughs that are not very hydrated (percentage by weight of water with respect to the flour lower than 50%) and in any case allow to provide products that are very different (in terms of appearance and organoleptic properties) from handcrafted products. For this reason, the use of industrial rolling units is not widespread and is relegated to products with lower quality standards with respect to handcrafted ones.

WO 2015/115220 A1 discloses a device for spreading doughs.

The aim of the present invention is to solve the problems described above by providing a device for spreading doughs which allows the automated forming of focaccias, pinsas, spianatas, pizzas, flatbreads, baked products with a substantially laminar shape and other similar food products with characteristics that are similar to handcrafted ones.

Within this aim, an object of the invention is to provide a device for spreading doughs that can operate on high-hydration doughs.

Another object of the invention is to provide a device for spreading doughs which is suitable for imprinting on the dough, after its spreading, impressions similar to those left by the fingers of a manual operator.

Another object of the invention is to provide a device for spreading doughs with high productivity.

Another object of the invention is to provide a device for spreading doughs that is structurally simple.

Another object of the invention is to provide a device for spreading doughs constituted by materials that are suitable for the food industry and can be washed and sanitized easily.

A further object of the present invention is to provide a device for spreading doughs that has low costs, is relatively simple to provide in practice and of safe application.

This aim and these and other objects that will become more apparent hereinafter are achieved by a device for spreading doughs of the type comprising at least one supporting surface on which a predefined quantity of dough can be accommodated, characterized in that it comprises movement means for a frame which accommodates a plurality of sliding blocks which protrude toward said supporting surface, said movement means being configured for at least one displacement of said frame from a first configuration of maximum distance of said blocks from said surface to a second configuration of minimum distance of said blocks from said surface, said sliding blocks being controlled by a respective actuator configured for their translation according to a predefined stroke on their plane of arrangement, when said frame is in said second configuration the translation of said blocks from a first arrangement, in which they are mutually close, to a second arrangement, in which they are mutually spaced, producing the transverse stretching of said predefined quantity of dough with consequent widening thereof and reduction of its thickness.

Further characteristics and advantages of the invention will become better apparent from the description of a preferred but not exclusive embodiment of the device for spreading doughs, illustrated by way of non-limiting example in the accompanying drawings, wherein:
Figure 1 is a schematic axonometric top view of a possible embodiment of a device for spreading doughs according to the invention;
Figure 2 is a schematic axonometric bottom view of the device of Figure 1;
Figure 3 is a schematic axonometric view of a first step of operation of the device of Figure 1;
Figure 4 is a schematic axonometric view of a second step of operation of the device of Figure 1;
Figure 5 is a schematic top view of the second step of operation of the device of Figure 1;
Figure 6 is a schematic top view of a third step of operation of the device of Figure 1.

With particular reference to the figures, a device for spreading doughs is generally designated by the reference numeral 1.

The device 1 for spreading doughs A comprises at least one supporting surface 2 on which a predefined amount of dough A can be accommodated.

The device 1 advantageously comprises movement means for a frame 3 which accommodates a plurality of sliding blocks 4 which protrude towards the supporting surface 2.

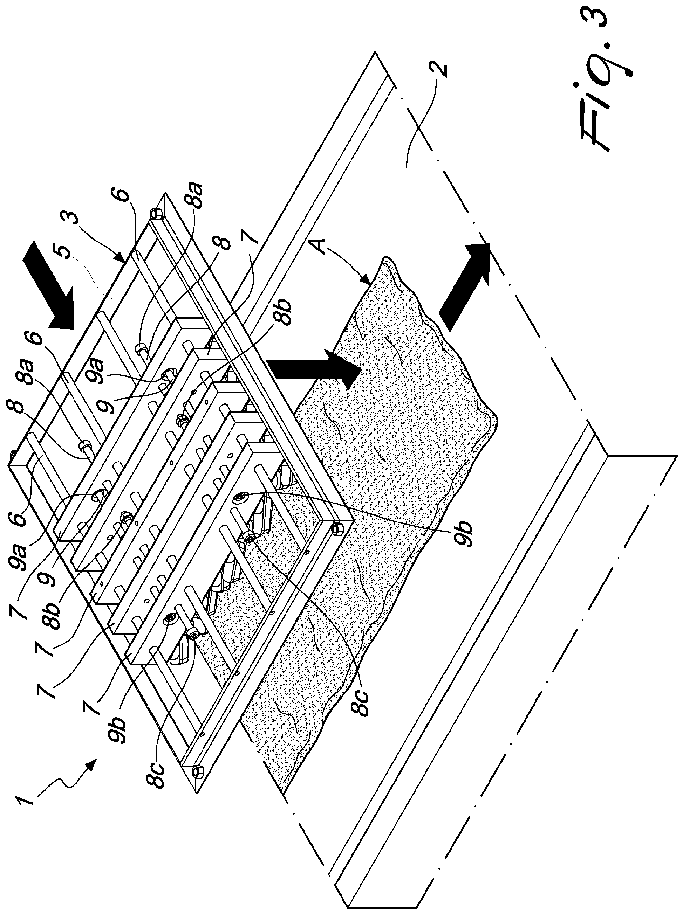

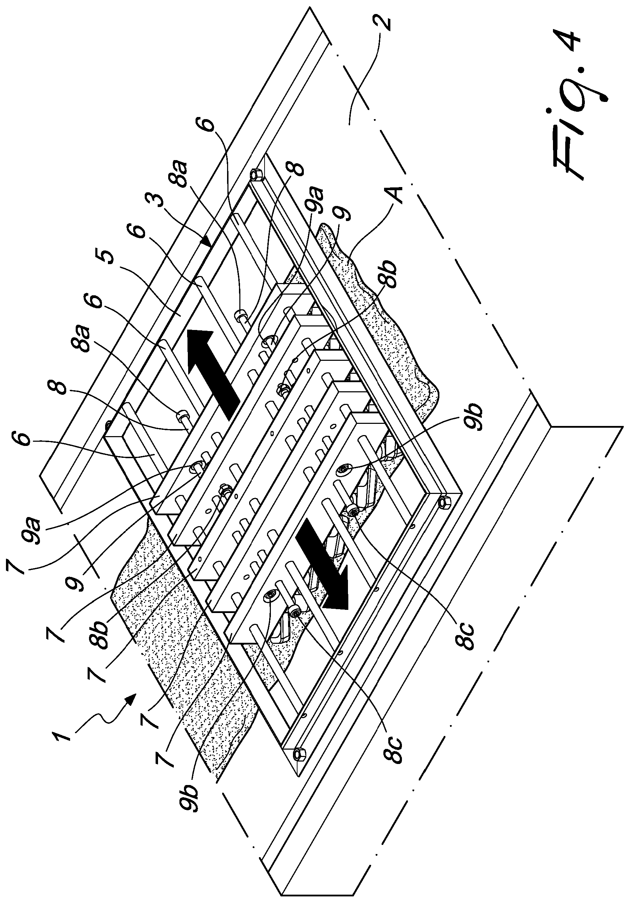

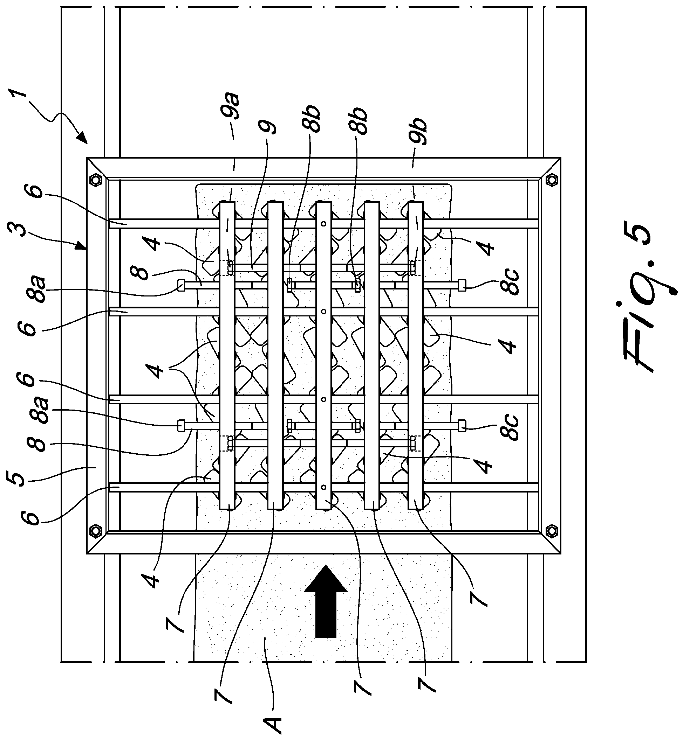

The movement means are configured to generate at least one displacement of the frame 3 from a first configuration of maximum distance of said sliding blocks 4 from the surface 2 (illustrated by way of non-limiting example in the accompanying Figure 3) to a second configuration of minimum distance of said sliding blocks 4 from the surface 2 (illustrated by way of non-limiting example in the accompanying Figures 4, 5 and 6).

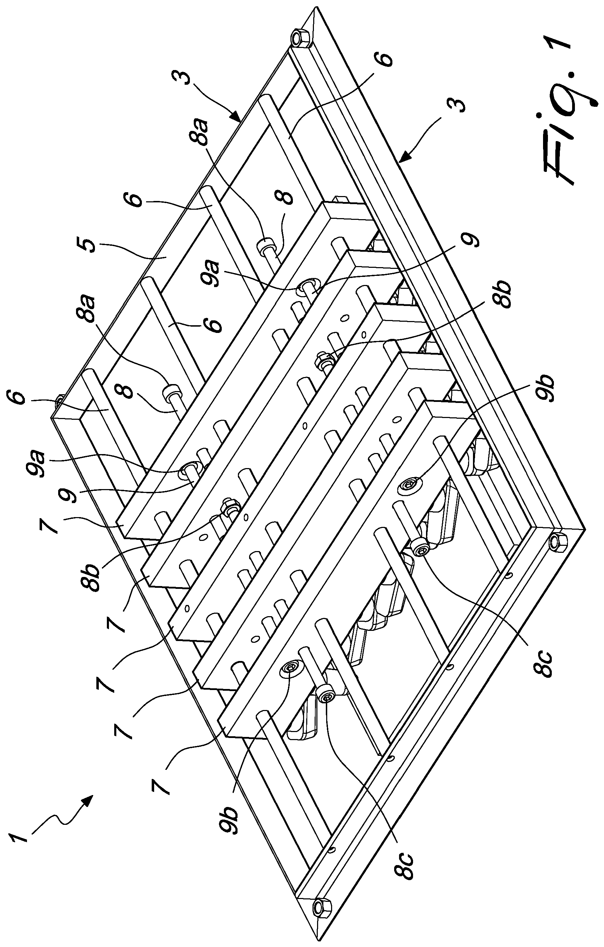

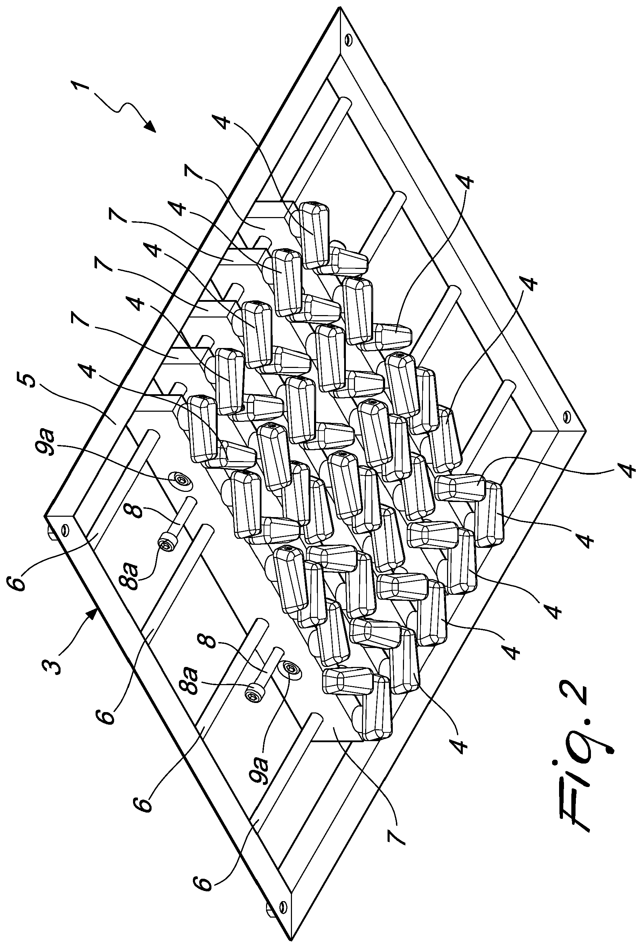

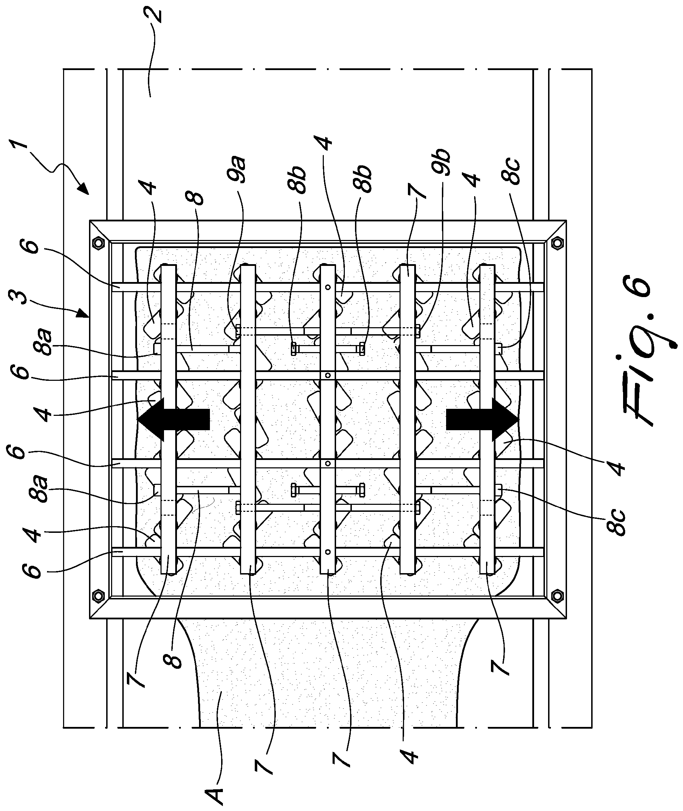

The sliding blocks 4 are conveniently served by a respective actuator configured for their translation along a predefined stroke on their plane of arrangement. When the frame 3 is in the second configuration (i.e., arranging the blocks 4 at the minimum distance from the surface 2), the translation of the blocks 4 (by the respective actuator) occurs from a first arrangement, in which they are mutually close (illustrated by way of non-limiting example in the accompanying Figures 1, 2, 3, 4 and 5), to a second arrangement, in which they are mutually spaced (illustrated by way of non-limiting example in the accompanying Figure 6), causing the transverse stretching of the predefined amount of dough A, with consequent widening thereof and reduction of its thickness.

According to the present invention, the frame 3 comprises a perimetric border 5 which supports a plurality of transversely distributed parallel crossmembers 6, with respect to which the blocks 4 can slide.

In greater detail, the frame 3 according to the present invention comprises a plurality of bands 7 which are perpendicular to the crossmembers 6 and are slidingly engaged thereon.

Each band 7 is intended to support at least one block 4.

According to the present invention the sliding of the bands 7 on the crossmembers 5 causes the mutual displacement of the blocks 4 from the first arrangement (in which they are mutually close) to the second arrangement (in which they are mutually further apart).

It should be specified that advantageously the at least one actuator configured to produce the translation of the blocks 4 is specifically configured to move mutually apart the outermost perpendicular bands 7.

In general terms, it should be noted that the blocks 4 arranged at the centerline of the frame 3 are positively fixed.

Sliding connecting elements 8, 9 are installed between the other blocks 4 (arranged externally with respect to those located at the centerline of the frame 3) and are provided with shoulders (respectively, the shoulders 8a, 8b and 8c on the connecting element 8 and the shoulders 9a and 9b on the shoulder element 9) designed to constitute stroke limits for the mutual entrainment of the blocks 4.

According to the present invention, by applying traction only to the outermost blocks 4, these, by virtue of the connecting elements, also entrain the other innermost blocks 4 until a position of maximum mutual spacing is reached which corresponds to the second arrangement of said blocks 4.

According to the present invention, the central band 7 is usefully fixed and sliding connecting rods (constituting a possible embodiment of the connecting elements 8 and 9) are efficiently arranged between the other bands 7 that are external to the central one (which are mutually contiguous) and are provided with stroke limit shoulders (8a, 8b and 8c and 9a and 9b, respectively) for the mutual entrainment of the bands 7.

In particular, it can be easily understood by observing the accompanying figures that by applying traction only to the outermost bands 7 said bands also entrain the ones interposed between them and the fixed central band 7 (by virtue of the presence of the sliding connecting rods 8 and 9 provided with the respective stroke limit shoulders 8a, 8b, 8c, 9a, 9b) until a position of maximum mutual spacing of said bands 7 is reached (illustrated by way of non-limiting example in the accompanying Figure 6) which corresponds to the second arrangement of the blocks 4.

It is necessary to point out that each block 4 may advantageously have a shape chosen from a polyhedron with rounded edges, a cylinder, a frustum, at least one portion of a sphere, a barrel, a solid having a base that resembles a predefined contour, and the like. On the frame 3, each block 4 may have any orientation, on the common plane of arrangement, with respect to the others that are present in said frame.

The specific shape and orientation, which can optionally be random, of the blocks 4 on frame 3 is intended to produce an action on the dough A that is as similar as possible to the action that would be exerted by the fingers of a manual worker who wishes to spread the dough by stretching it transversally.

The shape of the blocks 4, therefore, can conveniently resemble that of phalanges of human fingers, so that the impressions left in the dough A spread and stretched by the blocks 4 are as similar as possible to the impressions that can be observed on a dough flattened by hand (i.e., by an operator with his hands).

It is specified that the movement means that are associated with the frame 3 to install it in a food production plant are usefully of a type chosen from a Cartesian mover, a robotic arm and the like.

The at least one supporting surface 2, in this case, is advantageously of the type of a conveyor belt for conveying the predefined quantity of dough A from a doughing station, arranged upstream, to a station for processing the spread dough A (e.g. for its filling, freezing, baking, and the like).

It is specified that in such a case the movement means associated with the frame 3 are validly of the type configured to maintain the second configuration of the frame 3, following the conveyor belt that constitutes the surface 2, for a predefined time necessary for the movement of the blocks 4 from the first arrangement (in which they are mutually closer) to the second arrangement (in which they are separated and therefore have stretched the dough A transversely, spreading it).

It is specified that since the food dough A remains constantly resting on the surface 2, it does not need to have a high consistency and tensile strength (characteristics which would be necessary if the dough A were to be suspended temporarily), and therefore it is specified that the device 1 according to the invention is particularly suitable for operating on doughs with high hydration (i.e., in which the percentage by weight of water with respect to the flour is greater than 55%). This is particularly useful since at present it is only possible to operate in a manual (artisanal) manner on high-hydration doughs A.

Advantageously, the present invention solves the above mentioned problems by providing a device 1 for spreading doughs A that allows the automated forming of focaccias, pinsas, spianatas, pizzas, flatbreads, baked goods having a substantially laminar shape and other similar food products with characteristics that are similar to those of handcrafted ones.

Conveniently, the device 1 according to the invention can operate on high hydration doughs.

Favorably, the device 1 according to the invention is suitable to imprint impressions in the dough, after it has been spread, which are similar to those left by the fingers of a manual worker.

Positively, the device 1 according to the invention has high productivity.

Usefully, the device 1 according to the invention is structurally simple.

Advantageously, the device 1 according to the invention is constituted by materials which are suitable for the food industry and can be washed and sanitized easily.

Validly, the device 1 according to the invention is relatively simple to provide in practice and low in cost: these characteristics make the device 1 according to the invention an innovation of assured application.

The invention thus conceived is susceptible of numerous modifications and variations, all of which are within the scope of the appended claims; all the details may furthermore be replaced with other technically equivalent elements.

In the illustrated examplary embodiments, individual characteristics, shown in relation to specific examples, may in fact be interchanged with other different characteristics that exist in other examplary embodiments.

In practice, the materials used, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A device for spreading doughs of the type comprising at least one supporting surface (2) on which a predefined quantity of dough (A) can be accommodated, further comprising movement means for a frame (3) which accommodates a plurality of sliding blocks (4) which protrude toward said supporting surface (2), said movement means being configured for at least one displacement of said frame (3) from a first configuration of maximum distance of said blocks (4) from said surface (2) to a second configuration of minimum distance of said blocks (4) from said surface (2), said sliding blocks (4) being controlled by a respective actuator configured for their translation according to a predefined stroke on their plane of arrangement, when said frame (3) is in said second configuration the translation of said blocks (4) from a first arrangement, in which they are mutually close, to a second arrangement, in which they are mutually spaced, producing the transverse stretching of said predefined quantity of dough (A) with consequent widening thereof and reduction of its thickness, wherein said frame (3) comprises a perimetric border (5) which supports a plurality of transversely distributed parallel crossmembers (6), with respect to which said blocks (4) can slide, **characterized in that** it comprises a plurality of bands (7) which are perpendicular to said crossmembers (6) and are engaged slidingly thereon, each band (7) being designed to support at least one block (4), the sliding of said bands (7) on said crossmembers (6) producing the mutual displacement of said blocks (4) from said first arrangement to said second arrangement and **in that** said at least one actuator configured for the translation of said blocks (4) is configured for the mutual spacing of said outermost perpendicular bands (7) and **in that** said central band (7) is fixed and sliding connecting rods (8, 9) are arranged between the contiguous other bands (7) which are external to the central one, and are provided with stroke limit shoulders (8a, 8b, 8c, 9a, 9b) for the mutual entrainment of said bands (7) by applying a traction only to the outermost ones, until a position of maximum mutual spacing is reached which corresponds to said second arrangement of said blocks (4).

2. The device according to claim 1, **characterized in that** the blocks (4) arranged at the centerline of said frame (3) are fixed, sliding connecting elements (8, 9) being arranged between the other blocks (4) that are external to the ones arranged at the centerline of said frame (3) and being provided with stroke limit shoulders (8a, 8b, 8c, 9a, 9b) for the mutual entrainment of said blocks (4) by applying a traction only to the outermost ones, until a maximum mutual spacing position is reached which corresponds to said second arrangement of said blocks (4).

3. The device according to one or more of the preceding claims, **characterized in that** each said block (4) has a shape chosen between a polyhedron with rounded edges, a cylinder, a frustum, at least one portion of a sphere, a barrel, a solid which has a base that resembles a predefined contour and the like, each block (4) having any orientation, on the common plane of arrangement, with respect to the others that are present in said frame (3).

4. The device according to one or more of the preceding claims, **characterized in that** said movement means for said frame (3) are of a type chosen between a Cartesian mover, a robotic arm, and the like.

5. The device according to one or more of the preceding claims, **characterized in that** said at least one supporting surface (2) is of the type of a conveyor belt for the conveyance of said predefined quantity of dough (A) from a doughing station, arranged upstream, to a station for treating said spread dough (A).

6. The device according to the preceding claim, **characterized in that** said movement means for said frame (3) are of the type configured to maintain said second configuration of said frame (3), following said conveyor belt, for a predefined time that is necessary for the displacement of said blocks (4) from said first arrangement to said second arrangement.

## Patentansprüche

1. Eine Vorrichtung zum Ausbringen von Teig von der Art, die mindestens eine Auflagefläche (2) umfasst, auf der eine vordefinierte Menge an Teig (A) ausgebracht werden kann, weiter Bewegungsmittel für einen Rahmen (3) umfassend, der eine Vielzahl von Gleitblöcken (4) aufnimmt, welche zu der Auflagefläche (2) hin vorstehen; wobei die Bewegungsmittel ausgebildet sind für mindestens eine Verschiebung des Rahmens (3) aus einer ersten Konfiguration maximalen Abstands der Blöcke (4) von der Auflagefläche (2) in eine zweite Konfiguration minimalen Abstands der Blöcke (4) von der Auflagefläche (2); wobei die Gleitblöcke (4) von einem entsprechenden Antriebselement gesteuert werden, das konfiguriert ist für ihre Bewegung auf ihrer Anordnungsebene entsprechend einem vordefinierten Hub; wobei, wenn der Rahmen (3) sich in der zweiten Konfiguration befindet, die Bewegung der Blöcke (4) aus einer ersten Anordnung, in welcher sie einander nahe sind, in eine zweite Anordnung, in der sie voneinander beabstandet sind, die transversale Dehnung der vordefinierten Menge an Teig (A) mit daraus folgender Verbreiterung desselben und Verminderung seiner Dicke auslöst; wobei der Rahmen (3) einen Umfangsrand (5) umfasst, der eine Vielzahl quer verteilter paralleler Querträger (6) trägt, mit Bezug auf die die Blöcke (4) gleiten können; **dadurch gekennzeichnet, dass** sie eine Vielzahl von Leisten (7) umfasst, die senkrecht zu den Querträgern (6) sind und gleitend in sie eingreifen; wobei jede Leiste (7) dazu dient, mindestens einen Block (4) zu tragen, wobei das Gleiten der Leisten (7) auf den Querträgern (6) die Verschiebung der Blöcke (4) zueinander von der ersten Anordnung in die zweite Anordnung auslöst;
und dadurch, dass das mindestens eine Antriebselement, das für die Bewegung der Blöcke (4) konfiguriert ist, konfiguriert ist für die Beabstandung der äußersten senkrechten Leisten (7) voneinander; und dadurch, dass
die zentrale Leiste (7) fest ist und gleitende Verbindungsstangen (8, 9) zwischen den benachbarten anderen Leisten (7) angeordnet sind, die außerhalb der zentralen Leiste liegen, und mit Hubbegrenzungsschultern (8a, 8b, 8c, 9a, 9b) zum gegenseitigen Mitführen der Leisten (7) durch Ausüben eines Zugs nur auf die äußersten Leisten ausgestattet sind, bis eine Position maximaler gegenseitiger Beabstandung erreicht ist, die der zweiten Anordnung der Blöcke (4) entspricht.

2. Die Vorrichtung gemäß Anspruch 1, **dadurch gekennzeichnet, dass** die Blöcke (4), die an der Mittellinie des Rahmens (3) angeordnet sind, fest sind, wobei gleitende Verbindungselemente (8, 9) zwischen den anderen Blöcken (4) angeordnet sind, die außerhalb derjenigen liegen, die an der Mittellinie des Rahmens (3) angeordnet sind, und mit Hubbegrenzungsschultern (8a, 8b, 8c, 9a, 9b) zum gegenseitigen Mitführen der Blöcke (4) durch Ausüben eines Zugs nur auf die äußersten Blöcke ausgestattet sind, bis eine Position maximaler Beabstandung zueinander erreicht ist, die der zweiten Anordnung der Blöcke (4) entspricht.

3. Die Vorrichtung gemäß einem oder mehreren der obigen Ansprüche, **dadurch gekennzeichnet, dass** jeder Block (4) eine Form hat, die gewählt ist aus einem Vieleck mit gerundeten Ecken, einem Zylinder, einem Kegelstumpf, mindestens einem Abschnitt einer Kugel, einer Walze, einem Festkörper mit einer Basis, die einer vordefinierten Kontur ähnelt, und dergleichen; wobei jeder Block (4) eine beliebige Ausrichtung auf der gemeinsamen Anordnungsebene mit Bezug auf die anderen hat, die in dem Rahmen (3) vorhanden sind.

4. Die Vorrichtung gemäß einem oder mehreren der obigen Ansprüche, **dadurch gekennzeichnet, dass** die Bewegungsmittel für den Rahmen (3) von einer Art sind, die gewählt ist aus einem kartesischen Bewegungselement, einem Roboterarm und dergleichen.

5. Die Vorrichtung gemäß einem oder mehreren der obigen Ansprüche, **dadurch gekennzeichnet, dass** die mindestens eine Auflagefläche (2) von der Art eines Förderbands zum Befördern der vordefinierten Menge an Teig (A) von einer stromaufwärts angeordneten Knetstation zu einer Station zum Behandeln des ausgebreiteten Teigs (A) ist.

6. Die Vorrichtung gemäß dem obigen Anspruch, **dadurch gekennzeichnet, dass** die Bewegungsmittel für den Rahmen (3) von der Art sind, die ausgebildet ist, um die zweite Konfiguration des Rahmens (3), hinter dem Förderband, für einen vordefinierten Zeitraum beizubehalten, der für den Wechsel der Blöcke (4) von der ersten Anordnung in die zweite Anordnung erforderlich ist.

## Revendications

1. Dispositif pour épandre des pâtes, du type comprenant au moins une surface de support (2) sur laquelle une quantité prédéfinie de pâte (A) peut être déposée, comprenant en outre des moyens de déplacement pour un châssis (3) qui loge une pluralité de blocs coulissants (4) qui font saillie vers ladite surface de support (2), lesdits moyens de déplacement étant configurés pour au moins un déplacement dudit châssis (3) d'une première configuration de distance maximale desdits blocs (4) par rapport à ladite surface (2) à une deuxième configuration de distance minimale desdits blocs (4) par rapport à ladite surface (2), lesdits blocs coulissants (4) étant commandés par un actionneur respectif configuré pour leur translation selon une course prédéfinie dans leur plan d'agencement, lorsque ledit châssis (3) se trouve dans ladite deuxième configuration, la translation desdits blocs (4) d'une première disposition, dans laquelle ils sont mutuellement proches, à une deuxième disposition, dans laquelle ils sont mutuellement espacés, produisant l'étirement transversal de ladite quantité prédéfinie de pâte (A) avec pour conséquence son élargissement et la réduction de son épaisseur, dans lequel ledit châssis (3) comprend un bord périphérique (5) qui supporte une pluralité de traverses parallèles (6) réparties transversalement, par rapport auxquelles lesdits blocs (4) peuvent coulisser, **caractérisé en ce qu'**il comprend une pluralité de bandes (7) qui sont perpendiculaires auxdites traverses (6) et sont engagées de manière coulissante sur celles-ci, chaque bande (7) étant conçue pour supporter au moins un bloc (4), le coulissement desdites bandes (7) sur lesdites traverses (6) produisant le déplacement mutuel desdits blocs (4) de ladite première disposition à ladite deuxième disposition, et **en ce que** ledit au moins un actionneur configuré pour la translation desdits blocs (4) est configuré pour l'espacement mutuel desdites bandes perpendiculaires les plus extérieures (7) et **en ce que** ladite bande centrale (7) est fixe et des bielles coulissantes (8, 9) sont
disposées entre les autres bandes contiguës (7) qui sont extérieures à la bande centrale, et sont pourvues d'épaulements de limitation de course (8a, 8b, 8c, 9a, 9b) pour l'entraînement mutuel desdites bandes (7) en appliquant une traction uniquement sur les bandes les plus extérieures, jusqu'à ce qu'une position d'espacement mutuel maximal soit atteinte, qui correspond à ladite deuxième disposition desdits blocs (4).

2. Dispositif selon la revendication 1, **caractérisé en ce que** les blocs (4) disposés sur l'axe central dudit châssis (3) sont fixes, des éléments de liaison coulissants (8, 9) étant disposés entre les autres blocs (4) qui sont extérieurs à ceux disposés sur l'axe central dudit châssis (3) et étant pourvus d'épaulements de limitation de course (8a, 8b, 8c, 9a, 9b) pour l'entraînement mutuel desdits blocs (4) en appliquant une traction uniquement sur les blocs les plus extérieurs, jusqu'à ce qu'une position d'espacement mutuel maximal soit atteinte, qui correspond à ladite deuxième disposition desdits blocs (4).

3. Le dispositif selon une ou plusieurs des revendications précédentes,
**caractérisé en ce que** chaque bloc (4) a une forme choisie parmi un polyèdre à bords arrondis, un cylindre, un tronc, au moins une partie d'une sphère, un tonneau, un solide dont la base ressemble à un contour prédéfini et similaire, chaque bloc (4) ayant une orientation quelconque, dans le plan commun d'agencement, par rapport aux autres blocs présents dans ledit châssis (3).

4. Dispositif selon une ou plusieurs des revendications précédentes, **caractérisé en ce que** lesdits moyens de déplacement pour ledit châssis (3) sont d'un type choisi parmi un dispositif de déplacement cartésien, un bras robotisé et similaires.

5. Dispositif selon l'une ou plusieurs des revendications précédentes, **caractérisé en ce que** ladite au moins une surface de support (2) est du type d'un convoyeur à bande pour le transport de ladite quantité prédéfinie de pâte (A) depuis un poste de pétrissage, disposé en amont, vers un poste de traitement de ladite pâte étalée (A).

6. Dispositif selon la revendication précédente, **caractérisé en ce que** lesdits moyens de déplacement pour ledit châssis (3) sont du type configuré pour maintenir ladite deuxième configuration dudit châssis (3), à la suite dudit convoyeur, pendant un temps prédéfini qui est nécessaire pour le déplacement desdits blocs (4) de ladite première disposition à ladite deuxième disposition.
